# EUROPEAN PATENT SPECIFICATION

(11) **EP 0 513 840 B1**
(45) Date of publication and mention of the grant of the patent: **20.09.1995**
(21) Application number: 92108354.9
(22) Date of filing: 18.05.1992
(51) Int. Cl.: F16H 63/32, F16H 57/04

(54) **Oil collector insert for the lubrication of a synchronizer of a gear change of a vehicle**
Ölsammeleinsatz für eine Synchronisiereinrichtung eines Fahrzeugschaltgetriebes
Collecteur d'huile pour dispositif de synchronisation d'un changement de vitesse d'un véhicule

(30) Priority: 17.05.1991 IT TO910372
(43) Date of publication of application: 19.11.1992
(73) Proprietor: FIAT AUTO S.p.A., 10135 Torino (IT)
(72) Inventor: Malusardi, Marino, I-10100 Torino (IT)
(74) Representative: Plebani, Rinaldo

(56) References cited:
- EP-A- 0 059 396
- EP-A- 0 105 373
- PATENT ABSTRACTS OF JAPAN vol. 4, no. 120 (M-28)(602) 26 August 1980 JP-A-55 076 256 (FUJI JUKOGYO) 9 June 1980

## Description

The present invention relates to an oil collector insert for the lubrication of a synchronisation device of a gear change device of a vehicle as specified in the preamble of Claim 1. Such devices are current in the state of the art.

The gear change devices currently used in vehicles are normally formed by a box which contains lubricating oil up to a predetermined level; there are also two shafts, one of which, called the primary shaft, is disposed above the oil level and the other, called the secondary shaft, is disposed below this level.

Both shafts bear gearing and devices for synchronising the various gears; the gearing borne by the secondary shaft is almost totally immersed in the lubricating oil while the gearing borne by the primary shaft is only partially disposed below the oil level and in some cases are completely above it.

During the movement of the vehicle, with the gear change device consequently in rotation, the lubrication of the secondary shaft and the gearing borne thereby follows total immersion in the lubricating oil, while the lubrication of the primary shaft, the gearing borne thereby and in particular the synchronisation device is provided by the oil which, moved by the gearing in rotation keyed rigidly on the secondary shaft, is distributed within the entire gear box and thus also to the assembly of gearing and the synchronisation device mounted on the primary shaft.

This technical solution has, however, certain drawbacks, in particular when the vehicle engine is idling, with the gears in neutral during the first few minutes of operation of the engine after cold starting.

In these particular conditions, the lubrication of the synchronisation device and the gearing borne by the primary shaft is limited and inadequate, both as a result of the high viscosity of the lubricating fluid in the case of cold starting, and the low speed of rotation of the gearing borne by the secondary shaft and the resultant limited movement of the lubricating oil within the gear box in the case of a vehicle with its engine idling.

The inadequate lubrication of the synchronisation device leads to annoying noises in the gear change device when the primary shaft starts to rotate and also to premature wear of the synchronisation device as a result of the friction which is generated when a gear is engaged.

The object of the invention is to provide an oil collector insert for the lubrication of a synchronisation device of a gear change device of a vehicle which allows efficient lubrication of the synchronisation device borne by the primary shaft even when the vehicle engine is idling or after starting with a cold engine, and which therefore eliminates the noise of the gear change device in these particular operating conditions and also helps to reduce friction and thus the wear of the synchronisation device.

This object is achieved by the invention which relates to an oil collector insert for the lubrication of a synchroniser of a gear change device of a vehicle, this gear change device being of the type in which lubrication oil is housed in a box up to a predetermined level, with a primary shaft disposed above the oil level and a secondary shaft disposed parallel to the primary shaft and below the oil level, this primary shaft supporting a synchronisation device for at least one gear of the gear change device, this synchronisation device cooperating with a gear engagement fork and in turn comprising at least one engaging sleeve adapted to rotate rigidly with the primary shaft, this sleeve having an outer lateral surface disposed at least partly below the oil level, **characterized** in that this insert is secured detachably to the gear engagement fork and comprises an oil scraper blade cooperating with the outer lateral surface of the engaging sleeve, the oil scraper blade being shaped so as to cause the scraped oil to drip from the outer lateral surface of the engaging sleeve towards a respective engagement surface of the synchronisation device.

The invention is set out in further detail in the following non-limiting description of an embodiment thereof made with reference to the accompanying drawings, in which:
- Fig. 1 is a front elevation of an oil collector insert in accordance with the invention mounted on a synchronisation device shown only partially;
- Fig. 2 is a front three-quarters elevation of a synchronisation device on which the insert of Fig. 1 is mounted;
- Fig. 3 is a lateral elevation of the synchronisation device of Fig. 2; and - Fig. 4 is a diagrammatic view of a gear change device.

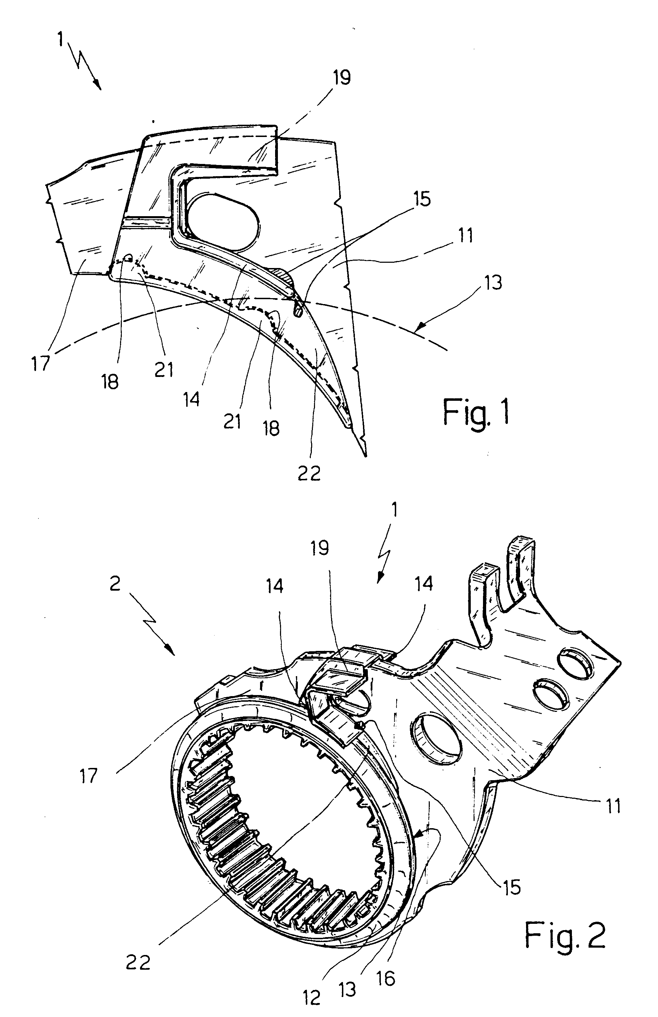

In Figs. 1 to 4, an oil collector insert 1 of the invention is mounted on a synchronisation device 2 of a gear change device 3 of a known vehicle, which is not shown for the purposes of simplicity.

The gear change device 3 comprises a box 4 which houses lubrication oil 5 up to a predetermined level 6; the gear change device 3 further comprises a primary shaft 7 disposed above the level 5 and a secondary shaft 8 disposed parallel to the primary shaft 7 but, in contrast to the latter, below the level 6 of the oil 5. The primary shaft 7 bears an assembly of gears 9, while the secondary shaft 8 bears a corresponding assembly of gears 10.

The primary shaft 7 bears, in addition to the gearing 9, the synchronisation device 2 for at least one gear of the gear change device 3; the synchronisation device 2 cooperates with a gear engagement fork 11 and in turn comprises at least one engaging sleeve 12 adapted to rotate rigidly in use with the primary shaft 7. The sleeve 12 is provided with an outer lateral surface 13 at least partly disposed below the level 6.

In accordance with the invention, the insert 1 is secured detachably to the fork 11 and comprises an oil scraper blade 14 cooperating with the outer lateral surface 13 of the sleeve 12; the oil scraper blade 14 is shaped so as to cause the oil 15 scraped from the outer lateral surface 13 of the sleeve 12 to drip towards an engagement surface 16 of the synchronisation device 2.

The oil scraper blade 14 has a width which is substantially greater than the width of the outer lateral surface 13 of the sleeve 12 and projects laterally from the surface 13 from the portion where the engagement surface 16 of the synchronisation device 2 is disposed.

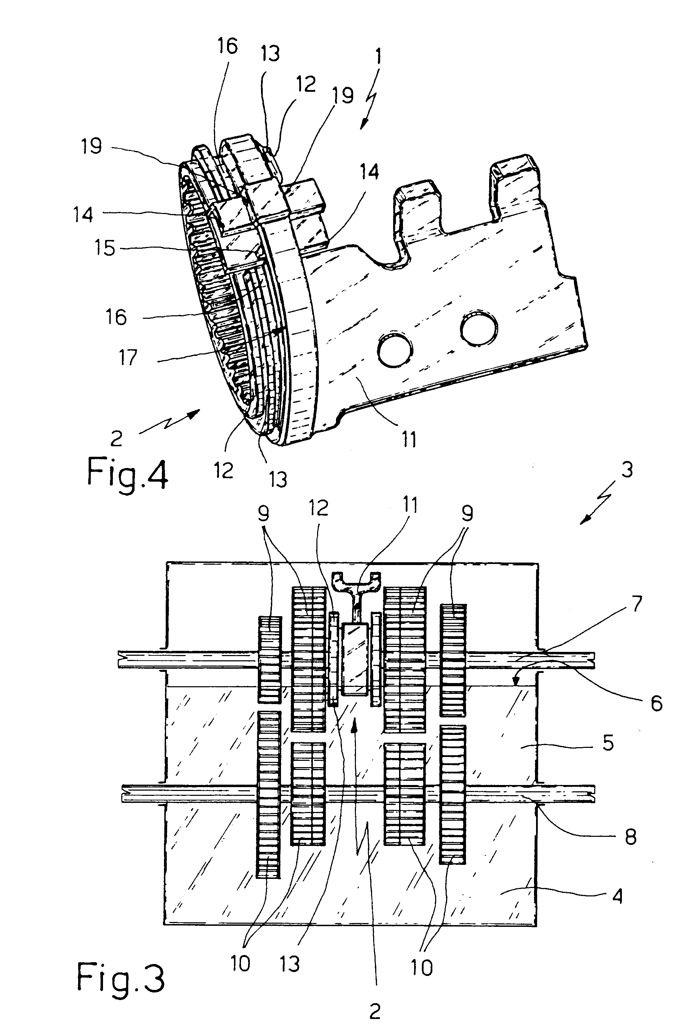

In a particular constructional embodiment of the invention, shown with particular reference to Figs. 2 and 3, the oil collector insert is U-shaped and is mounted astride the gear engagement fork 11; the insert 1 comprises a pair of opposite oil scraper blades 14 which are C-shaped and provided at respective opposite ends 19 of the insert 1. In use the blades 14 act on respective outer lateral surfaces 13 of a pair of opposite engaging sleeves 12.

The fork 11 has, on an outer lateral surface 17, a pair of recesses 18 of semicircular shape which are adapted to cooperate in use with corresponding projections 21 which are also of semicircular shape provided on a lateral member 22 of the insert 1.

In accordance with the invention, the lateral member 22 comes in use into contact with the outer lateral surface 17 of the fork 11 while the pair of projections 21 snap locks with the corresponding recesses 18 thereby locking the insert 1 astride the fork 11.

The advantages provided by the invention are evident from the above description: the introduction of an oil scraper blade 14 on the engaging sleeve 13 of the synchronisation device 2 of the gear change device 3 allows efficient lubrication of the engagement surface 16 even when the vehicle engine is idling, the gears are in neutral or immediately after cold starting when the lubricating oil is particularly viscous; this lubrication eliminates the noise of the gear change device 3 in these particular operating conditions and also helps to reduce its wear as a result of friction.

## Claims

1. An oil collector insert (1) for the lubrication of a synchronisation device (2) of a gear change device (3) of a vehicle, this gear change device (3) being of the type in which lubrication oil (5) is housed in a box (4) up to a predetermined level (6), with a primary shaft (7) disposed above the oil level (6) and a secondary shaft (8) disposed parallel to the primary shaft (7) and below the oil level (6), this primary shaft (7) supporting a synchronisation device (2) for at least one gear (9) of the gear change device (3), this synchronisation device (2) cooperating with a gear engagement fork (11) and in turn comprising at least one engaging sleeve (12) adapted to rotate rigidly with the primary shaft (7), this sleeve (12) having an outer lateral surface (13) disposed at least partly below the oil level (6); **characterized** in that this insert (1) is secured detachably to the gear engagement fork (11) and comprises an oil scraper blade (14) cooperating with the outer lateral surface (13) of the engaging sleeve (12), the oil scraper blade (14) being shaped so as to cause the scraped oil to drip from the outer lateral surface (13) of the engaging sleeve (12) towards a respective engagement surface (16) of the synchronisation device (2).

2. An oil collector insert (1) as claimed in claim 1, characterized in that the oil scraper blade (14) has a width which is substantially greater than the width of the outer lateral surface (13) of the sleeve (12) and in that this blade (14) projects laterally from this surface (13) from the portion where the engagement surface (16) of the synchronisation device (2) is disposed.

3. An oil collector insert (1) as claimed in claim 1 or 2, characterized in that the insert (1) is U-shaped and is mounted astride the gear selection fork (11) and comprises a pair of opposite oil scraper blades (14) provided at the location of respective opposite ends (19) of the insert (1), these blades acting in use on respective outer lateral surfaces (13) of a pair of opposite engaging sleeves (12).

4. An oil collector insert (1) as claimed in claim 3, characterized in that the fork (11) has, on an outer lateral surface (17), at least two recesses (18) of semicircular shape adapted to secure the insert (1) in use.

5. An oil collector insert (1) as claimed in claim 4, characterized in that it is provided with a lateral member (22) adapted to come in use into contact with the outer lateral surface (17) of the fork (11), this lateral member (22) being further provided with at least two projections (21) of substantially semicircular shape adapted to engage with the recesses (18) provided on the outer lateral surface (17) of the fork (11), these projections (21) and recesses (18) cooperating in a snap-locking manner in use.

6. An oil collector insert (1) as claimed in any preceding claim, characterized in that the oil scraper blade (14) is substantially C-shaped, the blade (14) being secured laterally to one end (19) of the insert (1) and extending laterally in a snap-locking manner from one side facing towards the sleeve (12).

## Patentansprüche

1. Ölsammeleinsatz (1) für das Schmieren einer Synchronisierungsvorrichtung (2) einer Schaltgetriebevorrichtung (3) eines Fahrzeugs, wobei die Getriebeschaltvorrichtung (3) von dem Typ Ist, bei dem Schamieröl (5) in einer Box (4) bis zu einem vorbestimmten Niveau (6) aufgenommen ist, wobei eine primäre Welle (7) oberhalb des Ölniveaus (6) angeordnet ist und eine sekundäre Welle (8) parallel zu der primären Welle (7) und unterhalb des Ölniveaus (6) angeordnet ist, wobei die primäre Welle (7) eine Synchronisierungsvorrichtung (2) für mindestens ein Zahnrad (9) der Schaltgetriebevorrichtung (3) trägt, wobei diese Synchronisierungsvorrichtung (2) mit einer Zahnradeingriffsgabel (11) zusammenwirkt und wiederum mindestens eine Eingriffshülse (12) aufweist, die dazu geeignet ist, sich fest mit der primären Welle (7) zu drehen, wobei die Hülse (12) eine äußere, laterale Oberfläche (13) besitzt, die mindestens teilweise unterhalb des Ölniveaus (6) angeordnet ist; dadurch gekennzeichnet, daß dieser Einsatz (1) abnehmbar an der Zahnradeingriffsgabel (11) gesichert ist und ein Ölabstreifermesser (14) aufweist, das mit der äußeren, lateralen Oberfläche (13) der Eingriffshülse (12) zusammenwirkt, wobei das Ölabstreifermesser (14) so geformt ist, um zu bewirken, daß Öl abgestreift wird, um es von der äußeren, lateralen Oberfläche (13) der Eingriffshülse (12) zu einer entsprechenden Eingriffsoberfläche (16) der Synchronisierungsvorrichtung (2) abtropfen zu lassen.

2. Ölsammeleinsatz (1) nach Anspruch 1, dadurch gekennzeichnet, daß das Ölabstreifermesser (14) eine Breite besitzt, die im wesentlichen größer als die Breite der äußeren, lateralen Oberfläche (13) der Hülse (12) ist, und daß dieses Messer (14) lateral von dieser Oberfläche (13) von dem Bereich vorsteht, wo die Eingriffsoberfläche (16) der Synchronisierungsvorrichtung (2) angeordnet ist.

3. Ölsammeleinsatz (1) nach Anspruch 1 oder 2, dadurch gekennzeichnet, daß der Einsatz (1) U-förmig ist und auf der Zahnradauswählgabel (11) reitend befestigt ist und ein Paar gegenüberliegender Ölabstreifermesser (14) aufweist, die an der Stelle jeweiliger gegenüberliegender Enden (19) des Einsatzes (1) vorgesehen sind, wobei diese Messer im Gebrauch auf jeweilige äußere seitliche Oberflächen (13) eines Paars entgegengesetzter Eingriffshülsen (12) einwirken.

4. Ölsammeleinsatz (1) nach Anspruch 3, dadurch gekennzeichnet, daß die Gabel (11) an einer äußeren, lateralen Oberfläche (17) mindestens zwei Ausnehmungen (18) einer halbkreisförmigen Form besitzt, die dazu geeignet sind, den Einsatz (1) im Gebrauch zu sichern.

5. Ölsammeleinsatz (1) nach Anspruch 4, dadurch gekennzeichnet, daß er mit einem lateralen Teil (22) versehen ist, das dazu geeignet ist, im Gebrauch mit der äußeren, lateralen Oberfläche (17) der Gabel (11) in Kontakt zu gelangen, wobei dieses laterale Teil (22) weiterhin mit mindestens zwei Vorsprüngen (21) einer im wesentlichen halbkreisförmigen Form versehen ist, die dazu geeignet sind, alt den Ausnehmungen (18), die an der äußeren, lateralen Oberfläche (17) der Gabel (11) vorgesehen sind, in Eingriff zu treten, wobei diese Vorsprünge (21) und Ausnehmungen (18) in einer sich einschnappend verriegelnden Art und Weise im Gebrauch zusammenwirken.

6. Ölsammeleinsatz (1) nach einem der vorhergehenden Ansprüche, dadurch gekennzeichnet, daß das Ölabstreifermesser (14) im wesentlichen C-förmig ist, wobei das Messer (14) lateral an einem Ende (19) des Einsatzes (1) gesichert ist und sich lateral in einer sich einschnappend verriegelnden Art und Weise von einer Seite erstreckt, die zu der Hülse (12) hin gerichtet ist.

## Revendications

1. Insert de collecte d'huile (1) pour la lubrification d'un dispositif de synchronisation (2) d'un changement de vitesse (3) d'un véhicule, ce changement de vitesse (3) étant du type dans lequel une huile lubrifiante (5) est contenue dans une boîte (4) jusqu'à un niveau prédéterminé (6), un arbre primaire (7) est situé au-dessus du niveau d'huile (6) et un arbre secondaire (8) parallèle à l'arbre primaire (7) est situé au-dessous du niveau d'huile (6), cet arbre primaire (7) supportant un dispositif de synchronisation (2) pour au moins un pignon (9) du changement de vitesse (3), ledit dispositif de synchronisation (2) coopérant avec une fourchette d'enclenchement de vitesse (11) et comportant lui-même au moins un manchon d'enclenchement (12) prévu pour tourner rigidement avec l'arbre primaire (7), ledit manchon (12) ayant une surface latérale extérieure (13) située au moins en partie au-dessous du niveau d'huile (6) ; caractérisé en ce que ledit insert (1) est fixé de façon démontable à la fourchette d'enclenchement de vitesse (11) et comprend une lame de raclage d'huile (14) qui coopère avec la surface latérale extérieure (13)du manchon d'enclenchement (12), la lame de raclage d'huile (14) étant configurée d'une manière telle que l'huile raclée s'égoutte de la surface latérale extérieure (13) du manchon d'enclenchement (12) vers une surface de contact respective (16) du dispositif de synchronisation (2).

2. Insert de collecte d'huile (1) suivant la revendication 1, caractérisé en ce que la lame de raclage d'huile (14) a une largeur qui est sensiblement plus grande que la largeur de la surface latérale extérieure (13) du manchon (12), et en ce que cette lame (14) fait saillie latéralement par rapport à cette surface (13) et par rapport à l'endroit où est située la surface de contact (16) du dispositif de synchronisation (2).

3. Insert de collecte d'huile (1) suivant la revendication 1 ou 2, caractérisé en ce que l'insert (1) est en forme de U et est monté de part et d'autre de la fourchette de sélection de vitesse (11) et il comprend deux lames de raclage d'huile opposées (14) prévues à l'endroit des extrémités respectives opposées (19) de l'insert (1), ces lames agissant en utilisation sur les surfaces latérales extérieures respectives (13) de deux manchons d'enclenchement opposés (12).

4. Insert de collecte d'huile (1) suivant la revendication 3, caractérisé en ce que la fourchette (11) comporte, sur une surface latérale extérieure (17), au moins deux évidements semi-circulaires (18) permettant de bloquer l'insert (1) en utilisation.

5. Insert de collecte d'huile (1) suivant la revendication 4, caractérisé en ce qu'il comprend un élément latéral (22) prévu pour venir en contact, en utilisation, avec la surface latérale extérieure (17) de la fourchette (11), cet élément latéral (22) comportant en outre au moins deux saillies (21) sensiblement semi-circulaires prévues pour venir en prise avec les évidements (18) prévus dans la surface latérale extérieure (17) de la fourchette (11), ces saillies (21) et ces évidements (18) coopérant pour un verrouillage élastique,en utilisation.

6. Insert de collecte d'huile (1) suivant une quelconque des revendications précédentes, caractérisé en ce que la lame de raclage d'huile (14) est sensiblement en forme de C, la lame (14) étant fixée latéralement à une extrémité(19) de l'insert (1) et s'étendant latéralement en verrouillage élastique à partir d'une face tournée vers le manchon (12).
